# EUROPÄISCHE PATENTSCHRIFT

(11) **EP 0 582 359 B1**
(45) Veröffentlichungstag und Bekanntmachung des Hinweises auf die Patenterteilung: **20.05.1998**
(21) Anmeldenummer: 93250210.7
(22) Anmeldetag: 16.07.1993
(51) Int. Cl.: A01N 43/08

(54) **Tb-wirksame Carbonsäure**
Carboxylic acid effective against tuberculosis
Acide carboxylique efficace contre le tuberculose

(30) Priorität: 31.07.1992 DE 4225794
(43) Veröffentlichungstag der Anmeldung: 09.02.1994
(73) Patentinhaber: Schülke & Mayr GmbH, 22851 Norderstedt (DE)
(72) Erfinder: Eggensperger, Heinz, Dr., D-22397 Hamburg (DE); Beilfuss, Wolfgang, Dr., D-22339 Hamburg (DE); Mohr, Michael, D-24568 Kaltenkirchen (DE); Diehl, Karl-Heinz, D-22844 Norderstedt (DE)
(74) Vertreter: UEXKÜLL & STOLBERG

(56) Entgegenhaltungen:
- CH-A- 323 778
- DE-A- 3 229 097
- GB-A- 1 012 629
- US-A- 1 554 642
- ZEITSCHRIFT FÜR HYGIENE UND INFEKTIONSKRANKHEITEN Bd. 121 , 1938 , BERLIN, DE; Seiten 405 - 431 E. HAILER 'Die Einwirkung keimtötender Stoffe auf Tuberkelbacillen des Typus humanus und bovinus. IV. Mitteilung. Versuche mit Säuren der aromatischen Reihe.'

## Beschreibung

Die Erfindung betrifft die Verwendung einer Carbonsäure als bakterizider Wirkstoff.

Desinfektionsmittel mit bakteriziden Wirkstoffen werden in vielen Bereichen eingesetzt, wobei sie der Bekämpfung von Mikroorganismen dienen. Beispielsweise werden sie zur Desinfektion von Händen, Operationsfeldern, Wunden, Instrumenten, Oberflächen, Wäsche, auf dem Gebiet der Landwirtschaft, im Katastrophenschutz und im Pflanzenschutz verwendet.

Von großem Interesse ist die Wirksamkeit von Desinfektionsmitteln gegen Mykobakterien, insbesondere gegen Tuberkulose-Erreger, die aufgrund ihres strukturellen Aufbaus im Verhältnis zu Bakterien oder Pilzen und Hefen vergleichweise widerstandsfähig sind, so daß häufig keine Abtötung erfolgt, sondern lediglich ihre Vermehrung für einen kurzen Zeitraum gehemmt wird. Erstrebenswert sind möglichst kurze Einwirkzeiten der Desinfektionsmittel bei nichts destoweniger gründlicher und nachhaltiger Desinfektionswirkung.

Als Wirkstoffe gegen Mykobakterien sind u.a. Aldehyde wie Formaldehyd, Succinaldehyd oder Glutaraldehyd, Phenolverbindungen, Aktivsauerstoffverbindungen wie Peressigsäure, Aminverbindungen wie N,N-Bis(3-aminopropyl)laurylamin, Alkohole wie Ethanol, Isopropanol, n-Propanol oder Phenoxyethanol bekannt. Hierbei handelt es sich überwiegend um lipophile, flüchtige, reaktionsfähige oder alkalisch reagierende Stoffe, die eine Reihe von nachteiligen Eigenschaften aufweisen. Beispielsweise sind sie so wenig wasserlöslich, daß der Einsatz von Lösungsmitteln oder Lösungsvermittlern erforderlich ist, bestehen bei ihrem Einsatz ökotoxikologische Bedenken wie beispielsweise beim Einsatz von Phenolen, führen sie zu einer starken Geruchsbelästigung wie beispielsweise Aldehyde, weisen sie eine unbefriedigende Stabilität auf wie beispielsweise Aktivsauerstoffverbindungen wie Peressigsäure, erfordert ihre Flüchtigkeit, ihr Flammpunkt und ihre Brennbarkeit besondere Aufmerksamkeit und Sorgfalt bei der Handhabung wie beispielsweise niedere Alkohole, besteht die Möglichkeit der Bildung von Nitrosaminen wie beispielsweise bei Aminen, ist aufgrund ihrer vergleichsweise schwachen bis mittleren Wirksamkeit eine hohe Einsatzkonzentration erforderlich wie bei aromatischen Alkoholen oder besteht Unverträglichkeit mit anderen Formulierungsbestandteilen wie beispielsweise bei Aminen oder aromatischen Alkoholen, die, wenn sie zusammen mit kationenaktiven Verbindungen eingesetzt werden, auf Oberflächen aufziehen und durch anionischen Tenside desaktiviert werden.

Ferner ist aus der DE 32 29 097 bekannt, daß Kombinationen von Alkylsulfonaten bzw. Alkylsulfaten mit Carbonsäuren wie Weinsäure, Milchsäure, Benzoesäure, Furan-2-carbonsäure oder Pyridincarbonsäure antibakteriell und fungizid wirken. Eine Wirksamkeit der Einzelkomponenten in Bezug auf die besonders widerstandsfähigen Mykobakterien ist nicht beschrieben

Der Erfindung liegt die Aufgabe zugrunde, einen Wirkstoff zur Verfügung zu stellen, der gegenüber Mykobakterien ausgezeichnet und schnell wirksam ist und dabei aber auch hinreichend löslich, geruchsarm, nicht-flüchtig, hinreichend stabil, umweltverträglich, biologisch gut abbaubar, mit anderen Formulierungsbestandteilen gut verträglich, in breitem Umfang mikrobizid wirksam und preiswert zugänglich ist.

Als Lösung dieser Aufgabe wird zur Bekämpfung von Mykobakterien die Verwendung von Furan-2-Carbonsäure vorgeschlagen.

Bevorzugte Ausführungsformen sind Gegenstand der Unteransprüche.

Es hat sich überraschenderweise gezeigt, daß die erfindungsgemäße, begrenzt wasserlösliche Furan-2-Carbonsäure eine ausgezeichnete Wirksamkeit gegen Mykobakterien aufweist und das gewünschte Anforderungsprofil erfüllt.

Die erfindungsgemäße Furan-2-Carbonsäure kann entweder in ihrer Säureform oder in Form eines ihrer Salze beispielsweise ihrer Alkalimetallsalze eingesetzt werden. Aus diesen Salzen kann sie durch in der fertigen Formulierung vorhandene Säuerungsmittel wie beispielsweise organische oder anorganische Säuren oder saure Reinigungsmittel in die wirksamere Säureform überführt werden.

Die erfindungsgemäßen, Tb-wirksame Furan-2-Carbonsäure kann in Form einer wäßrigen und/oder alkoholischen Gebrauchslösung (ready-for-use-Lösung), eines Flüssig-Konzentrats, Pulvers oder Granulats oder auf Trägern wie beispielsweise Tüchern aufgezogen vorliegen.

Vorteilhaft ist, daß die erfindungsgemäße, Tb-wirksame Furan-2-Carbonsäure auch in einer Flüssig-Konzentrat-, Pulver- oder Granulat-Formulierung oder auf einen Träger aufgezogen eine ausgezeichnete Stabilität aufweist und aufgrund ihrer hinreichenden Wasserlöslichkeit und/oder Alkohollösichkeit durch einfaches Verdünnen mit, Auflösen in oder Ausspülen mit Wasser eine aktivierte Wirkstofflösung mit wiederum ausgezeichneter Haltbarkeit hergestellt werden kann.

Eine gebrauchsfertige Lösung weist einen pH-wert von bis zu 7, bevorzugter bis zu 5 und besonders bevorzugt bis zu 4 auf.

Zur Erzielung einer ausreichenden desinfizierenden Wirkung liegt die Konzentration der erfindungsgemäße Furan-2-Carbonsäure bzw. ihrer Salze bezogen auf das Gesamtgewicht der Lösung im Bereich von 0,01 bis 8%, vorzugsweise 0,1 bis 6 %, bevorzugter 0,2 bis 4 % und insbesondere 0,5 bis 2%.

Darüber hinaus kann die erfindungsgemäße Furan-2-Carbonsäure zusätzlich in Kombination mit im Desinfektionsbereich üblichen Hilfs-, Zusatz- und/oder anderen bakteriziden Wirkstoffen eingesetzt werden. Hierfür kommen beispielsweise Alkohole, Aldehyde, Amine, Ether, kationenaktive Verbindungen, nicht-ionische, anionischen oder amphotere Tenside, Korrosionsschutzmittel, Parfüm, Farbstoffe oder Komplexbildner in Frage, wobei sich bei den Wirkstoffen teilweise synergistische Wirkungen ergeben. Bevorzugt sind nicht-ionische, amphotere, kationenaktive und anionische Tenside sowie Alkohole, wobei amphotere, kationenaktive und anionische Tenside und Alkohole besonders bevorzugt sind.

Durch die Kombination mit anderen Wirkstoffen kann in Abhängigkeit vom Anwendungszweck ein breiteres Wirkungsspektrum erzielt werden. Verträgliche mit der erfindungsgemäßen Furan-2-Carbonsäure kombinierbare Wirkstoffe sind beispielsweise Aldehyde wie Formaldehyd, Succinaldehyd, Glutaraldehyd oder Glyoxal, kationische Verbindungen wie Benzalkoniumchlorid, Aktivsauerstoffverbindungen wie H₂O₂, Peressigsäure, Perglutarsäure oder t-Butylhydroperoxid.

Ein weiterer Vorteil bei der Anwendung der erfindungsgemäßen Furan-2-Carbonsäure besteht darin, daß sie aufgrund ihrer geringen Flüchtigkeit relativ geruchsarm ist. Darüber hinaur ist sie biologisch gut abbaubar und umweltverträglich.

Anstelle von Wasser können auch Alkohole als Lösungsmittel oder Lösungsvermittler eingesetzt werden, um Konzentrate oder Gebrauchslösungen herzustellen. Geeignete Alkohole, die teilweise selbst bakterizide Wirkung haben, sind beispielsweise aliphatische Alkohole mit bis zu 16 Kohlenstoffatomen (Mono-, Di-, Tri- oder Polyhydroxyverbindungen), aromatische Alkohole mit bis zu 10 Kohlenstoffatomen, Glykole und Glykolether.

Beispiele für aliphatische Alkohole sind Ethanol, n-Propanol, i-Propanol, 2-Ethylhexanol, 2-Ethylhexenol, n-Decanol, Tetrahydrofurfurylalkohol, Sorbitol und Glycerin. Beispiele für aromatische Alkohole sind Benzylalkohol, 2-Phenylethylalkohol, α-Methylbenzylalkohol, Phenylpropanole und Phenylbutanole, wobei die Verbindungen am aromatischen Ring oder in der Alkylkette substituiert sein können. Beispiele für Glykole sind Ethylenglykol, Propylenglykole, Butylenglykole, Diethylenglykol, Triethylenglykol, Tetraethylenglykol, Polyethylenglykole, Dipropylenglykol, Diglycerin, Triglycerin und Polyglycerin. Beispiele für Glykolether sind Phenoxydiethylenglykol, Phenoxytriethylenglykol, Phenoxypolyethylenglykol, Phenoxybutanole, wobei der aromatische Ring auch substituiert sein kann, Butylglykol, Butyldiglykol, Hexylglykole, Octylglykole und Decylglykole. Bevorzugte Verbindungen sind Ethanol, i-Propanol, n-Propanol, Phenethylalkohol, 3-Phenylpropanol-1 und Phenoxybutanol (letzterer als Isomerengemische vorliegend). Besonders bevorzugt sind Ethanol, i-Propanol und n-Propanol.

Als Tenside oder Netzmittel eignen sich beispielsweise nicht-ionische Tenside wie Fettalkoholpolyglykolether, anionische Tenside wie Alkylethersulfate, wobei die Tenside auch zur Schaumregulierung bzw. zur Unterstützung einer Reinigungsaktivität und der Wirksamkeit beitragen können. Bevorzugte erfindunggemäße Desinfektionsmittel enthalten neben der Furan-2-Carbonsäure und Alkoholen auch anionische Tenside wie Fettalkylethersulfate.

Geeignete Komplexbildner sind beispielsweise Ethylendiamintetraessigsäure (EDTA), Nitrilotriessigsäure (NTA) und Dihydroxyethylglycin oder deren Salze, die die biozide Wirksamkeit ebenfalls verbessern können.

Mittel zur Korrektur des pH-Werts wie anorganische oder organische Säuren, Basen oder Salze derselben können ebenfalls zusammen mit der erfindungsgemäßen Furan-2-Carbonsäure verwendet werden.

Als Füllstoff bzw. Träger sind im allgemeinen inerte Stoffe wie Natriumsulfat und ähnliche Stoffe geeignet.

Formulierungen, die die erfindungsgemäße Furan-2-Carbonsäure enthalten, sind lagerstabil, besitzen eine hohe mikrobizide Wirksamkeit und darüber hinaus ein breites Wirkungsspektrum, wodurch neben Bakterien, Hefen und Pilzen insbesondere die schwer zu inaktivierenden Mykobakterien wirksam bekämpft werden können.

Gegenüber bekannten Desinfektionsmitteln bieten Formulierungen auf Basis der erfindungsgemäßen Furan-2-Carbonsäure insbesondere folgende Vorteile:
- Wirksamkeit auch bei Temperaturen unter 18°C,
- kein Auftreten von Schaumproblemen,
- ausgezeichnete Stabilität und Haltbarkeit,
- geringe Flüchtigkeit der Wirkstoffe, Geruchsarmut,
- biologische Abbaubarkeit und gefahrlose Handhabbarkeit,
- ausgezeichnete Wirksamkeit bei breitem Wirkungsspektrum mit kurzen Einwirkzeiten,
- durch Erhöhung des pH-Wertes erfolgt Überführung in die entsprechenden weniger aktiven Salzlösungen, während durch Erniedrigung des pH-Wertes die ursprüngliche Wirksamkeit wieder hergestellt werden kann,
- zum Teil Wirkungssteigerung bei Kombination mit anderen Hilfs-, Zusatz- oder Wirkstoffen,
- gute bis sehr gute Materialverträglichkeit,
- Unterstützung der Reinigungswirkung,
- ökonomisch und ökologisch effektiverer Einsatz.

Der Ausdruck Stabilität bezieht sich im vorliegenden Zusammenhang sowohl auf das Aussehen der Lösungen (keine Niederschläge, Trübungen, Inhomogenitäten) als auch auf die Konstanz des pH-Wertes und die Konstanz der Wirkstoffgehalte.

Formulierungen auf Basis der erfindungsgemäßen Furan-2-Carbonsäure eignen sich zur Behandlung von Flächen, Instrumenten, Geräten, Haut und Händen. Sie können beispielsweise in Krankenhäusern, Arztpraxen, öffentlichen und privaten Einrichtungen wie Bädern, Saunen, Sportgaststätten, Hotels, Haushalt (Bad, Küche), Industriebetrieben, insbesondere in der lebensmittelverarbeitenden Industrie, Kosmetik- und Pharmaindustrie, in der Landwirtschaft (Tierhaltung, Pflanzenzucht, Gartenbau), im Katastrophenschutz oder im Pflanzenschutz eingesetzt werden.

Insbesondere der Einsatz anstelle von Percarbonsäuren wie Peressigsäure, die sehr reaktionsfreudig, zum Teil sehr geruchsintensiv und nur begrenzt stabil sind, ist denkbar.

Die Erfindung wird anhand der folgenden Beispiele näher erläutert. Wenn nicht anders angegeben, sind alle Teil- und Prozentangaben auf das Gewicht bezogen.

### Beispiel 1

Zu Vergleichszwecken wurde die Wirksamkeit anderer Carbonsäuren gegen Mycobact. terrae im Instrumentenversuch gemäß DGHM gestestet.

Dazu wurden wäßrige Lösungen der zu testenden Carbonsäuren bzw. Testformulierungen mit den in der Tabelle angegebenen Wirkstoffkonzentrationen hergestellt (2% Wirkstoffkonzentration bedeutet 2 Gewichtsteile Carbonsäure + 98 Gewichtsteile Wasser).

| Lösungsmittel : Wasser | | | | | |
|---|---|---|---|---|---|
| Carbonsäure | Wirkstoff-konz. | Einwirkzeit: | | | |
| | | 15' | 30' | 45' | 60' |
| Milchsäure | 2% | ++++ | ++++ | +++ | +++ |
| | 1% | 8 | 8 | 8 | 8 |
| Äpfelsäure | 2% | 8 | 8 | 8 | 8 |
| Weinsäure | 2% | 8 | 8 | 8 | 8 |
| Glutarsäure | 2% | 8 | ++++ | +++ | +++ |
| | 1% | 8 | ++++ | ++++ | ++++ |
| Legende: 8 = sehr starkes Wachstum, ++++ bzw. +++ bzw. ++ bzw. + bzw. M bzw. E = starkes bis vereinzeltes Wachstum in abnehmender Rangfolge, - = kein Wachstum | | | | | |

Die getesteten Carbonsäuren sind gegen Mycobact. terrae praktisch unwirksam.

### Beispiel 2

In diesem Beispiel wurde die Wirksamkeit von erfindungsgemäßer Furan-2-Carbonsäure gegenüber Mycobact. terrae im Instrumentenversuch gemäß DGHM getestet.

Es wurden wiederum wäßrige Lösungen der Wirkstoffe hergestellt.

| Lösungsmittel : Wasser | | | | | |
|---|---|---|---|---|---|
| Carbonsäure | Wirkstoff-konz. | Einwirkzeit: | | | |
| | | 15' | 30' | 45' | 60' |
| Furan-2-carbonsäure | 1% | - | - | - | - |
| | 0,5% | ++++ | E | - | - |
| | 0,25% | 8 | ++++ | ++++ | +++ |
| Furan-2-carbonsäure-Na-Salz (pH 7) | 4% | ++++ | ++++ | ++++ | ++++ |
| Legende: 8 = sehr starkes Wachstum, ++++ bzw. +++ bzw. ++ bzw. + bzw. M bzw. E = starkes bis vereinzeltes Wachstum in abnehmender Rangfolge. - = kein Wachstum | | | | | |

Die Versuche zeigen, daß die getestete Furan-2-Carbonsäure gegen Mycobact. terrae ausgezeichnet wirksam ist. Sie ist signifikant wirksamer als die zur Zeit in Desinfektions- und Reinigungsmitteln eingesetzten Carbonsäuren. Bei pH-Werten um 7 ist die Wirksamkeit deutlich reduziert, da dann das weniger wirksame Salz vorliegt.

### Beispiel 3

In diesem Beispiel wurde die Wirksamkeit der erfindungsgemäßen Furan-2-Carbonsäure in Kombination mit einer kationenaktiven Verbindung (Benzalkoniumchlorid) gegen Mycobact. terrae im Instrumentenversuch gemäß DGHM gestestet.

Die verwendete Formulierung bestand aus zwei Teilen Furan-2-Carbonsäure und 10 Teilen Benzalkoniumchlorid (50%ig) sowie 88 Teilen vollentsalztes Wasser.

| Säure | Einsatz-Konz. | Einwirkzeit: | | | |
|---|---|---|---|---|---|
| | | 15' | 30' | 45' | 60' |
| 2 Tle Furan-2-carbons. | 50% | - | - | - | - |
| + 10 Tle Benzalkon. + 88 Tle Wasser | 25% | M | - | - | - |
| pH-Werte: Konz.: 1,7 1%-ig in LW 4,2 10%-ig in LW 2,7 | | | | | |
| 2 Tle Phosphorsäure | konz. | + | M | M | E |
| 75%-ig (BRW) | 50% | ++++ | +++ | +++ | +++ |
| + 10 Tle Benzalkon. + 88 Tle Wasser | 25% | ++++ | +++ | +++ | +++ |
| pH-Werte: Konz.: 1,5 1%-ig in LW 4,4 10%-ig in LW 2,3 Legende: 8 = sehr starkes Wachstum, ++++ bzw. +++ bzw. ++ bzw. + bzw. M bzw. E = starkes bis vereinzeltes Wachstum in abnehmender Rangfolge - = kein Wachstum BRW = Betriebsrohware Einsatzkonzentration = Menge der jeweiligen Formulierung im Gemisch mit Wasser | | | | | |

Das Beispiel zeigt, daß die Kombination aus erfindungsgemäßer Furan-2-Carbonsäure mit anderen bioziden Wirkstoffen wie Benzalkoniumchlorid unverändert Tb-wirksam ist, während eine Kombination mit Säuren wie beispielsweise Phosphorsäure keine Tb-Wirksamkeit entfaltet.

### Beispiel 4

In diesem Beispiel wurde die Wirksamkeit von erfindungsgemäßer Furan-2-Carbonsäure gegenüber Mycobact. terrae im Keimträgerversuch (Baumwolle) gemäß DGHM getestet. Es wurde wiederum eine wäßrige Lösung des Wirkstoffs hergestellt.

| Lösungsmittel: Wasser | | | | | |
|---|---|---|---|---|---|
| Carbonsäure | Wirkstoff-Konz. | Einwirkzeit: | | | |
| | | 15' | 30' | 60' | 120' |
| Furan-2-Carbonsäure | 2% | - | - | - | - |
| Legende: 8 = sehr starkes Wachstum, ++++ bzw. +++ bzw. ++ bzw. + bzw. M bzw. E = starkes bis vereinzeltes Wachstum in abnehmender Rangfolge - = kein Wachstum | | | | | |

Wie sich gezeigt hat, ist Furan-2-carbonsäure selbst bei geringerer Wirkstoffkonzentration (Faktor 8) signifikant wirksam. .

## Patentansprüche

1. Verwendung von Furan-2-carbonsäure zur Bekämpfung von Mykobakterien, ausgenommen in einer Kombination mit Phenoxyethanol, Phenoxypropanol oder Tetraethylenglykolmonophenylether mit einem in auf Mykobakterien synergistisch wirkendem Mengenverhältnis derselben.

2. Verwendung nach Anspruch 1, dadurch gekennzeichnet, daß die Furan-2-carbonsäure in Form eines ihrer Salze eingesetzt wird.

3. Verwendung nach Anspruch 1 oder 2, dadurch gekennzeichnet, daß die Furan-2-carbonsäure oder eines ihrer Salze in Form einer wäßrigen und/oder alkoholischen Lösung eingesetzt wird.

4. Verwendung nach Anspruch 3, dadurch gekennzeichnet, daß die Lösung einen pH-Wert von bis zu 7, insbesondere bis zu 5 und vorzugsweise bis zu 4 aufweist.

5. Verwendung nach einem der vorhergehenden Ansprüche, dadurch gekennzeichnet, daß die Furan-2-carbonsäure oder eines ihrer Salze bezogen auf das Gewicht der Lösung in einer Konzentration von 0,01 bis 8 Gew.%, vorzugsweise 0,1 bis 6 % und insbesondere 0,2 bis 4 % eingesetzt wird.

6. Verwendung nach Anspruch 1 oder 2, dadurch gekennzeichnet, daß die Furan-2-carbonsäure oder eines ihrer Salze in Form einer Flüssig-Konzentrat-, Pulver- oder Granulat-Formulierung oder auf einen Träger aufgezogen vorliegt.

7. Verwendung nach einem der vorhergehenden Ansprüche, dadurch gekennzeichnet, daß die Furan-2-carbonsäure oder eines ihrer Salze in Kombination mit im Desinfektionsbereich üblichen Hilfs-, Zusatz- und/oder weiteren Wirkstoffen eingesetzt wird.

## Claims

1. Use of furan-2-carboxylic acid to combat mycobacteria, except in a combination with phenoxyethanol, phenoxypropanol or tetraethylene glycol monophenyl ether with a proportion thereof acting synergistically on mycobacteria.

2. Use according to claim 1, characterised in that the furan-2-carboxylic acid is used in the form of one of its salts.

3. Use according to claim 1 or 2, characterised in that the furan-2-carboxylic acid or one of its salts is used in the form of an aqueous and/or alcoholic solution.

4. Use according to claim 3, characterised in that the solution has a pH of up to 7, particularly up to 5 and preferably up to 4.

5. Use according to one of the preceding claims, characterised in that the furan-2-carboxylic acid or one of its salts is used in a concentration of 0.01 to 8 wt.%, preferably 0.1 to 6% and particularly 0.2 to 4%, relative to the weight of the solution.

6. Use according to claim 1 or 2, characterised in that the furan-2-carboxylic acid or one of its salts is present in the form of a liquid concentrate, powder or granular formulation or collected on a support.

7. Use according to one of the preceding claims, characterised in that the furan-2-carboxylic acid or one of its salts is used in combination with auxiliaries, additives and/or further active ingredients customary in the disinfection sector.

## Revendications

1. Utilisation de l'acide furane-2-carboxylique pour combattre les mycobactéries, pris dans une combinaison avec du phénoxyéthanol, du phénoxypropanol ou du tétraéthylèneglycolmonophényléther avec une quantité de ceux-ci ayant une action synergique sur les mycobactéries.

2. Utilisation selon la revendication 1, caractérisée en ce que l'acide furane-2-carboxylique est utilisé sous la forme de l'un de ses sels.

3. Utilisation selon la revendication 1 ou 2, caractérisée en ce que l'acide furane-2-carboxylique ou bien l'un de ses sels est utilisé sous la forme d'une solution aqueuse et/ou dans l'alcool.

4. Utilisation selon la revendication 3, caractérisée en ce que la solution présente un pH pouvant atteindre 7, en particulier pouvant atteindre 5 et avantageusement pouvant atteindre 4.

5. Utilisation selon l'une quelconque des revendications précédentes caractérisée en ce que l'acide furane-2-carboxylique où l'un de ses sels, en se rapportant au poids de la solution, est utilisé à une concentration de 0,01 à 8% en poids, avantageusement de 0,1 à 6% et en particulier de 0,2 à 4%.

6. Utilisation selon la revendication 1 ou 2, caractérisée en ce que l'acide furane-2-carboxylique ou bien l'un de ses sels est présent sous la forme d'une formule en concentré liquide, en poudre, ou en granulés ou bien appliqué sur un support.

7. Utilisation selon l'une des revendications précédentes, caractérisée en ce que l'acide furane-2-carboxylique ou bien l'un de ses sels est utilisé en combinaison avec les agents auxiliaires, additifs et/ou autres agents actifs habituels dans le domaine de la désinfection.
